(19) Europäisches Patentamt
European Patent Office
Office européen des brevets

(11) EP 4 711 225 A1

(12) EUROPEAN PATENT APPLICATION

(43) Date of publication:
**18.03.2026 Bulletin 2026/12**

(21) Application number: **25200396.7**

(22) Date of filing: **05.09.2025**

(51) International Patent Classification (IPC):
***B60W 40/12*** *(2012.01)* ***G06N 20/00*** *(2019.01)*

(52) Cooperative Patent Classification (CPC):
**B60W 40/12; G06N 20/00;** B60W 2040/1307; B60W 2050/0022; B60W 2050/0025; B60W 2050/0031; B60W 2050/0088; B60W 2300/13; B60W 2520/26; B60W 2530/20; B60W 2530/201; B60W 2552/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 US 202418827232**

(71) Applicant: **Volvo Truck Corporation**
**405 08 Göteborg (SE)**

(72) Inventor: **Subramanian, Chidambaram**
**Jamestown, NC, 27282 (US)**

(74) Representative: **Valea AB**
**Box 1098**
**405 23 Göteborg (SE)**

# (54) ESTIMATING AN EFFECTIVE WHEELBASE

(57) A computer system (900) comprising processing circuitry (902) configured to estimate an effective wheelbase (30) of a vehicle unit (100) is provided. The effective wheelbase (30) of the vehicle unit (100) is a distance between a first position (10c) of a first coupling point or a first axle group (1) of the vehicle unit (100), to a second position (20c) of a second axle group (2) of the vehicle unit (100). The processing circuitry (902) is configured to obtain multiple candidate estimations of the effective wheelbase (30). The multiple candidate estimations have been estimated using different estimation models. The processing circuitry (902) is configured to estimate the effective wheelbase (30) based on the multiple candidate estimations.

100
200
D
10
10c
11
40
1
31
30
32
900
902
F1
41
21
31c
20c
2
F2
42
22
32c

Fig. 1



Processed by Luminess, 75001 PARIS (FR)

## Description

### TECHNICAL FIELD

The disclosure relates generally to estimating vehicle characteristics which may be used for improved vehicle control. In particular aspects, the disclosure relates to estimating an effective wheelbase. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An effective wheelbase represents a distance between centers of a front axle group and a rear axle group of a vehicle unit such as a tractor or any other suitable towing unit. The effective wheelbase may also represent distances by other definitions such as to be a distance between a coupling point and a center point of an axle group, such as when the vehicle unit is a trailer.

The effective wheelbase is a parameter that may significantly influence a stability, maneuverability, and overall performance of a vehicle as the vehicle may be controlled based on the effective wheelbase. For example, controlling a vehicle may consider the respective effective wheelbase when controlling yaw, load distribution, ride comfort, stability, etc.

Estimating or measuring the effective wheelbase is difficult in particular when the vehicle has more than two axles. This is since the effective wheelbase may change over time if the vehicle is modified or if considering dynamic movement of the axle, change in vertical load applied to axles of the vehicle, or change in center of rotation when estimating the effective wheelbase. It follows that estimations of effective wheelbases may be inaccurate and as a consequence, vehicle control may be suboptimal.

Since current estimations may be inaccurate, design of vehicle systems may also need to be conservative and reactive, thereby providing limited vehicle control.

Hence, a problem in vehicle control arises when the effective wheelbase is inaccurate.

### SUMMARY

According to a first aspect of the disclosure, a computer system comprising processing circuitry configured to estimate an effective wheelbase of a vehicle unit is provided. The vehicle unit is preferably a truck or a tractor. The effective wheelbase of the vehicle unit is a distance between a first position of a first coupling point or a first axle group of the vehicle unit, to a second position of a second axle group of the vehicle unit. The first axle group may be a front axle group preferably comprising a steering axle. The second axle group may be a rear axle group of the vehicle unit preferably comprising one or more drive axles.

The processing circuitry is configured to obtain multiple candidate estimations of the effective wheelbase. The multiple candidate estimations have been estimated using different estimation models.

The processing circuitry is configured to estimate the effective wheelbase based on the multiple candidate estimations.

The first aspect of the disclosure may seek to estimate the wheelbase of the vehicle units in an accurate manner. A technical benefit may include more accurate vehicle control. This is since vehicle control may use the effective wheelbase as an input or may rely on a model of the vehicle unit with the effective wheelbase. Furthermore, using multiple candidate estimations as a basis for estimating the wheelbase may improve accuracy of the wheelbase estimation and may reduce impact of any error from any single candidate estimation.

As a further effect, since the effective wheelbase can be accurately determined, this allows for vehicle designs to be more precise and fine-grained as it can be assumed that controlling the vehicle can be made using an accurate estimation of the effective wheelbase.

Optionally in some examples, including in at least one preferred example, obtaining the multiple candidate estimations comprises estimating or obtaining a first candidate wheelbase estimation estimated based on one or more forces applied to and/or acting on one or more wheels of the second axle group according to a first estimation model.

A technical benefit may include improved accuracy of the estimated effective wheelbase and thereby improved vehicle control. The forces may be lateral and/or longitudinal and may shift position of axles in the second axle group relative to each other and hence when considering the forces, the accuracy of the estimation of the effective wheelbase can be improved.

Optionally in some examples, including in at least one preferred example, the first candidate wheelbase estimation is further estimated based on:

- a respective wheel slip of the one or more wheels of the second axle group,

- friction between a road surface of the one or more wheels of the second axle group, or
- a combination thereof.

A technical benefit may include improved accuracy of the estimated effective wheelbase and thereby improved vehicle control.

Optionally in some examples, including in at least one preferred example, obtaining the multiple candidate estimations comprises estimating or obtaining a second candidate wheelbase estimation estimated based on vertical load applied to one or more wheels and/or one or more axles of the second axle group.

A technical benefit may include improved accuracy of the estimated effective wheelbase and thereby improved vehicle control. The different vertical load may indicate where the central position of the second axle group is located and hence, when considering the vertical load, the accuracy of the estimation of the effective wheelbase can be improved.

Optionally in some examples, including in at least one preferred example, the second candidate wheelbase estimation is further estimated based on at least one of:

- friction between a road surface travelled by the vehicle unit and the one or more wheels of the second axle group, and
- respective tire wear of respective tires of the one or more wheels of the second axle group.

A technical benefit may include improved accuracy of the estimated effective wheelbase and thereby improved vehicle control.

Optionally in some examples, including in at least one preferred example, effective wheelbase is estimated as a weighted average of the multiple candidate estimations, and wherein weights of the multiple candidate estimations are predefined or wherein the processing circuitry is configured to determine the weights of the multiple candidate estimations based on at least one of wheel or tire parameters of one or more wheels of the second axle group.

A technical benefit may include improved accuracy of the estimated effective wheelbase and thereby improved vehicle control. This is since the multiple candidate estimations may be associated with different accuracy based on different situations, and may therefore be weighted based on its current accuracy or the current situation. The weighted average may also reduce any error appearing in any one of the estimations.

Optionally in some examples, including in at least one preferred example, the processing circuitry is configured to obtain information indicative of at least one of wheel or tire parameters of one or more wheels of the second axle group, and wherein estimating the effective wheelbase based on the multiple candidate estimations is based on the obtained information indicative of the at least one of wheel or tire parameters.

A technical benefit may include improved accuracy of the estimated effective wheelbase and thereby improved vehicle control. This is since the multiple estimations may be based on the information indicative of the at least one of wheel or tire parameters, such as used for performing the estimations or used for determining which estimation to use, or the information may be used for other aspects for estimating the effective wheelbase such as for how to determine weights when the estimating the effective wheelbase based on a weighted average of the multiple candidate estimations.

Optionally in some examples, including in at least one preferred example, the information indicative of the at least one of wheel or tire parameters is obtained from:

- sensor data of one or more sensors of the vehicle unit,
- one or more signals of a Controller Area Network (CAN) of the vehicle unit, or
- a combination thereof.

A technical benefit may include improved accuracy of the estimated effective wheelbase and thereby improved vehicle control. This is since the information may be accurately obtained from the most suitable or accurate source.

Optionally in some examples, including in at least one preferred example, the information indicative of the at least one of wheel or tire parameters of one or more wheels of the second axle group is at least partly obtained by utilizing respective tire sensors attached to one or more wheels of the second axle group.

A technical benefit may include improved accuracy of the estimated effective wheelbase and thereby improved vehicle control. This is since the use of tire sensors may improve accuracy of the wheel or tire parameters.

Optionally in some examples, including in at least one preferred example, estimating the effective wheelbase comprises estimating the effective wheelbase by utilizing a trained machine learning model. In these examples, input to the machine learning model comprises one or more parameters associated with a current operational condition of the vehicle unit. The current operational condition may comprise wheel or tire parameters of the second axle group.

A technical benefit may include improved accuracy of the estimated effective wheelbase and thereby improved vehicle control. This is since the machine learning model may be trained such that the wheelbase estimation meets a required or sufficient accuracy.

Optionally in some examples, including in at least one preferred example, the machine learning model is trained on one or more training vehicle units using respective training wheelbase for respective different operational conditions of the respective training vehicle unit.

A technical benefit may include improved accuracy of the estimated effective wheelbase and thereby improved vehicle control. This is since the machine learning model may be trained to consider different operational conditions. Different operational conditions may for example indicate that certain candidate estimations of the multiple candidate estimations may be more suitable to use as a basis for the estimation of the wheelbase than the other candidate estimations.

Optionally in some examples, including in at least one preferred example, the machine learning model is trained to determine weights of the multiple candidate estimations and wherein estimating the effective wheelbase is based on a weighted average of the multiple estimation accounted for the determined weights.

A technical benefit may include improved accuracy of the estimated effective wheelbase and thereby improved vehicle control. This is since the machine learning model may weigh the candidate estimations based on which is the most accurate given the current operational condition or other parameter or context of the vehicle unit.

Optionally in some examples, including in at least one preferred example, the processing circuitry is configured to, evaluate vehicle unit dynamics when the vehicle unit is controlled using the estimated effective wheelbase and to train the machine learning model based on said evaluation. In these examples, the vehicle unit dynamics are evaluated using sensor data of one or more sensors of the vehicle unit, using one or more signals of a CAN of the vehicle unit, or a combination thereof.

A technical benefit may include improved accuracy of the estimated effective wheelbase and thereby improved vehicle control. This is since the machine learning model may be trained based on how well the vehicle unit can be controlled with respect to the evaluated dynamics when using the estimated effective wheelbase.

Optionally in some examples, including in at least one preferred example, the processing circuitry is configured to control the vehicle unit based on the estimated effective wheelbase.

A technical benefit may include improved accuracy of the estimated effective wheelbase and thereby improved vehicle control due to usage of an accurate effective wheelbase estimation.

Optionally in some examples, including in at least one preferred example, the second position represents at least one of:

- a weighted average position with respect to a load distribution of load affecting or being applied to the second axle group,
- a position at which lateral forces are generated by the second axle group,
- a geometric center of the second axle group, and
- a center of rotation associated with the second axle group.

A technical benefit may include improved vehicle control. This is since the effective wheelbase can flexibly use any suitable representation of the second position. This means that the effective wheelbase which works best for controlling the vehicle unit, either by evaluation as the vehicle unit is controlled, or by any suitable model or simulation.

According to a second aspect of the disclosure, a vehicle unit is provided. The vehicle unit comprises and/or is controlled by the computer system according to the first aspect.

According to a third aspect of the disclosure, a computer-implemented method for estimating an effective wheelbase of a vehicle unit is provided. The effective wheelbase of the vehicle unit is a distance between a first position of a first coupling point or first axle group of the vehicle unit, to a second position of a second axle group of the vehicle unit.

The method comprises, by processing circuitry of a computer system, obtaining multiple candidate estimations of the effective wheelbase. The multiple candidate estimations have been estimated using different estimation models.

The method comprises, by the processing circuitry, estimating the effective wheelbase based on the multiple candidate estimations.

Optionally in some examples, including in at least one preferred example, the method further comprises any one or more of:

- by the processing circuitry, obtaining information of at least one of operational conditions of the vehicle unit, preferably comprising information indicative of at least one of wheel or tire parameters of one or more wheels of the second axle group;
- by the processing circuitry, controlling the vehicle unit based on the estimated effective wheelbase; and
- by the processing circuitry, evaluating vehicle unit dynamics when the vehicle unit is controlled using the estimated effective wheelbase and to train a machine learning model for estimating the effective wheelbase based on said evaluation.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** is a vehicle unit according to an example.
**FIG. 2** is a flow chart of a method according to an example.
**FIG. 3** is a block diagram illustrating an example.
**FIG. 4** is a block diagram illustrating an example.
**FIG. 5** is a block diagram illustrating an example.
**FIG. 6** is a block diagram illustrating an example.
**FIG. 7** is another view of **FIG. 1,** according to an example.
**FIG. 8** is a flow chart of an exemplary method according to an example.
**FIG. 9** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

An effective wheelbase is a design parameter of most vehicles that significantly influences the vehicle's stability, maneuverability, and overall performance. A wheelbase is the horizontal distance between the centers of the front and rear axles of a vehicle. In the context of vehicles or vehicle units which have more than two axles in at least one of its axle groups, the effective wheelbase may be relative to all of the axles of the respective axle group and may need to be estimated. The effective wheelbase may need to be used for vehicle control and may affect the following aspects of a vehicle:

- stability
- maneuverability
- load distribution
- turning radius, and
- comfort

At present, there is no accurate way to estimate the effective wheelbase. This forces vehicle controllers to be designed to be conservative and reactive. Therefore, vehicle control may be suboptimal and vehicle design may further be suboptimal to also adhere to potentially inaccurate wheelbase estimations. The affected designs may relate to:

- tire design,
- load/suspension design,
- Advanced driver-assistance system (ADAS) design, and
- brake designs.

Hence, examples herein provide accurate estimation of an effective wheelbase of a vehicle unit. In essence, the estimation can be accurate since it is based on multiple candidate estimations of the effective wheelbase. In particular examples, estimating the effective wheelbase uses a machine learning model to set weights for the multiple candidate estimations, which weights are used for estimating the effective wheelbase using a weighted average of the multiple candidate estimations.

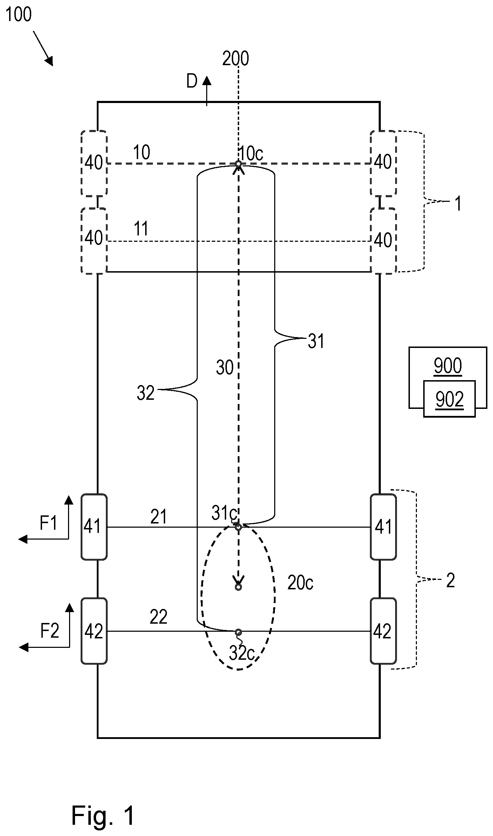

**FIG. 1** illustrates a **vehicle unit 100** according to an example. The vehicle unit 100 may be an entire vehicle or part of a vehicle such as a truck, bus, heavy-duty vehicle, car, etc. The vehicle unit 100 may preferably be a truck or a tractor, but the examples herein are also applicable for the vehicle unit 100 being a trailer or other towed unit.

The vehicle unit 100 may comprise a **first axle group 1** and/or may be coupled with a **second vehicle unit 200.** The first axle group 1 may be associated with a **first position 10c** which is a center of the first axle group 1. In some examples, the first axle group 1 comprises only a **single axle 10** which single axle 10 may be a steering axle. In these examples, the first position 10c may be a center of the single axle 10. When the first axle group 1 comprises multiple axles such as also comprising an **additional axle 11,** the first position 10c may be a geometric center of the multiple axles or any other suitable effective center positions, e.g., a position at which lateral forces are generated by the first axle group 1, a weighted average position with respect to a load distribution of load affecting or being applied to the first axle group 1, or a center of rotation associated with the first axle group 1.

When the vehicle unit 100 is coupled to the second vehicle unit 200, the first position 10c may be a coupling point such as part of a fifth wheel, to couple with the second vehicle unit 200. The first axle group 1 may have respective **first wheels 40.** In some examples, at least two of the first wheels 40 may be steerable.

The vehicle unit 100 comprises a **second axle group 2.** The second axle group 2 comprises one or more axles, preferably at least two axles such as a **first axle 21** with respective first wheels and a **second axle 22** with respective second wheels. While examples herein will mostly exemplify the second axle group 2 as comprising two axles, it should be noted that the examples herein apply for any number of axles as part of the second axle group 2.

The first axle group 1 may be a front axle group arranged longitudinally in front of the second axle group 2 in view of a **forward driving direction D.** Consequently, the second axle group 2 may be referred to as a Rear Axle Group (RAG).

**An effective wheelbase 30** of the vehicle unit 100 may in examples herein may be between the first position 10c and a **second position 20c.** The second position 20c may relate to a center of the second axle group 2. The center of the second axle group 2 may however be represented in different manners, which may be equivalent or different positions depending on the context and operation of the vehicle unit 100, for example when one or more **forces F1, F2** are applied by or are acting on one or more **axles 21, 22** or one or more **wheels 41, 42** of the second axle group 2.

Examples herein relate to estimating the effective wheelbase 30 using any suitable representation such as representation for the second position 20c. Furthermore, some examples herein relate to learning and/or adapting how to estimate the effective wheelbase 30 based on how well the vehicle unit 100 can be controlled using the estimated effective wheelbase 30. It follows that the examples herein are not bound by an exact definition of the effective wheelbase 30 or the second position 20c, as independent on which representations are used, the estimations may adapt to how the vehicle unit 100 is best controlled. However, as an example, the second position 20c may represent at least one of:

- a weighted average position with respect to a load distribution of load affecting or being applied to the second axle group 2,
- a position at which lateral forces are generated by the second axle group 2,
- a geometric center of the second axle group 2, and
- a center of rotation associated with the second axle group 2.

Depending on the representation of the second position 20c, the second position 20c may change dynamically as the vehicle unit 100 is operating such as when the one or more forces F1 and F2 are applied by or are acting on one or more axles 21, 22 or one or more wheels 41, 42 of the second axle group 2, thereby effectively moving the second position 20c.

The second position 20c may further change based on change in vehicle components such as tires, brakes, suspensions, etc.

When considering the geometric center of the second axle group 2, the second position 20c may be calculated based on a **first distance 31** between the first position 10c and a **center position 31c** of the first axle 21, and based on a **second distance 32** between the first position 10c and a **center position 32c** of the second axle 22. The effective wheelbase 30 may therefore be calculated on these distance and/or based on the center positions 31c, 32c. However, as the vehicle unit 100 is operating, the axles 21, 22 of the second axle group 2 may move laterally, and or vertical load on them may shift, thereby effectively moving the second position 20c, and thus, to accurately estimate the effective wheelbase 30, these forces and loads may need to be considered.

In examples herein, to estimate the effective wheelbase 30, multiple candidate estimations are used as a basis.

Examples herein may be performed by a **computer system 900** and/or a **processing circuitry 902** therein.

The computer system 900 and/or the processing circuitry 902 therein may be or may comprise an Electronic Control Unit (ECU) of the vehicle unit 100.

The computer system 900 and/or the processing circuitry 902 therein may be communicatively connected to any suitable entity of the vehicle unit 100 such that the computer system 900 and/or the processing circuitry 902 therein may be able to obtain any suitable signals, data, or parameters from entities of the vehicle unit 100, such as sensors, and such that the computer system 900 and/or the processing circuitry 902 therein may be able to control any suitable aspect of the vehicle unit 100, or at least provide information to a control unit which is configured to control any suitable aspect of the vehicle unit 100.

The computer system 900 and/or the processing circuitry 902 therein may be comprised in the vehicle unit 100, or may be comprised in a remote locations such as part of a server or cloud service. In other words, the computer system 900 and/or the processing circuitry 902 therein may be able to at least partly remote control the vehicle unit 100.

In examples herein, the effective wheelbase 30 may relate to any one or more of the below.

**Stability:** The effective wheelbase 30 may be used for determining the stability of the vehicle unit 100, in particular when the vehicle unit 100 is or is part of a multi axle truck.

**Maneuverability:** While a longer effective wheelbase enhances stability, it may have trade-offs in terms of maneuverability. The effective wheelbase 30 may be used for determining a maneuverability of the vehicle unit 100. Shorter wheelbases are generally more maneuverable and allow for tighter turns. Vehicle units often need to strike a balance between stability and maneuverability based on their intended use, such as highway driving or navigating through urban areas with tight corners.

**Load Distribution:** The load distribution of the vehicle unit 100 indirectly affects the effective wheelbase 30. This is since load may determine adhesion capabilities and lateral force generation capabilities.

**Turning Radius:** The turning radius of the vehicle unit 100 may be closely related to its effective wheelbase 30. A longer effective wheelbase usually results in a larger turning radius, impacting the vehicle units ability to negotiate sharp turns and navigate confined spaces. Conversely, a shorter effective wheelbase allows for a tighter turning radius.

**Ride Comfort:** The effective wheelbase 30 may also affect a ride comfort for both the driver and passengers. Longer wheelbases generally provide a smoother ride, as they absorb road irregularities more effectively. However, there may be instances where shorter wheelbases are preferred for specific applications, such as off-road driving.

In conclusion, estimating the effective wheelbase 30 of the vehicle unit 100 as part of examples herein, may assist in improving and balancing the above parameters such as by controlling said parameters or related parameters. If the effective wheelbase 30 is estimated accurately, it may be possible to optimize chassis design for Suspension, Tires and Brakes to very cost effective solutions while meeting standards and regulations.

As an example, a simple yaw controller of the vehicle unit 100 may be designed using the effective wheelbase 30 as below **Equation 1,** where the vehicle unit 100 is referred to as a vehicle.

$$\dot{\psi} = \frac{v}{L} \tan(\delta)$$

Where:

- $\dot{\psi}$ is the yaw rate (rate of change of the vehicle's heading angle).
- $v$ is the longitudinal velocity of the vehicle.
- $L$ is the effective wheelbase.
- $\delta$ is the steering angle.

**Equation 1.**

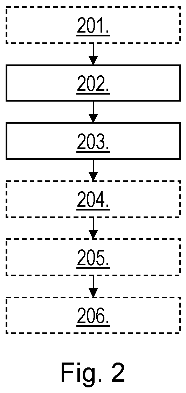

**FIG. 2** is a flow chart of a computer-implemented method for estimating the effective wheelbase 30 of the vehicle unit 100. The effective wheelbase 30 of the vehicle unit 100 is a distance between the first position 10c of a first coupling point or a first axle group 1 of the vehicle unit 100, to a second position 20c of the second axle group 2 of the vehicle unit 100.

The computer system 900 or the processing circuitry 902 therein may be configured to perform the method.

The method comprises any of the following actions in any suitable order.

**Action 201**

The method may comprise obtaining information of at least one of operational conditions of the vehicle unit 100.

The information may preferably comprise information indicative of at least one of wheel or tire parameters of one or more wheels of the second axle group.

The information indicative of the at least one of wheel or tire parameters may be obtained from sensor data of one or more sensors of the vehicle unit 100, or may be obtained from one or more signals of a CAN of the vehicle unit 100, or the information may be obtained as a combination thereof.

The information indicative of the at least one of wheel or tire parameters of one or more wheels 41, 42 of the second axle group 2 may in some examples be at least partly obtained by utilizing respective tire sensors attached to one or more wheels of the second axle group.

In other words, information as used in examples herein may be obtained in any suitable manner, preferably using a CAN of the vehicle unit 100 or by measuring the information using sensors of the vehicle unit 100, such as by using tire sensors attached to respective wheels of the vehicle unit 100. Tire sensors may be able to collect accelerometer data which may be used for determining forces performed by and/or acting upon the respective wheel or tire.

**Action 202**

The method comprises obtaining multiple candidate estimations of the effective wheelbase 30.
The multiple candidate estimations have been estimated using different estimation models.
Obtaining the multiple candidate estimations may comprise estimating the multiple candidate estimation or obtaining them in any other suitable manner.
As an example, obtaining the multiple candidate estimations may comprise estimating or obtaining a **first candidate wheelbase estimation.** The first candidate wheelbase estimation may be estimated based on one or more forces applied to and/or acting on the one or more wheels 41, 42 of the second axle group 2 according to a first estimation model. The forces may be e.g., the forces F1, F2 illustrated in FIG. 1. The forces may typically relate to longitudinal or lateral forces of the respective wheel or tire which may shift relative positions of the axles and thereby affect the effective wheelbase 30.
The first candidate wheelbase estimation may further be estimated based on a respective wheel slip of the one or more wheels 41, 42 or based on friction between a road surface of the one or more wheels 41, 42, or a combination thereof.
In some examples, obtaining the multiple candidate estimations comprises estimating or obtaining a **second candidate wheelbase estimation.** The second candidate estimation may be estimated based on vertical load applied to one or more wheels 41, 42 and/or one or more axles 21, 22 of the second axle group 2.
The different vertical loads may relate to where a center of load distribution of the second axle group is located which may affect the effective wheelbase 30.
The second candidate wheelbase estimation may further be estimated based on at least one of:

- friction between a road surface travelled by the vehicle unit 100 and the one or more wheels 41, 42, and
- respective tire wear of respective tires of the one or more wheels 41, 42.

Any further parameters which may affect movement of the second position may be applicable to use in the first or second wheelbase estimation.
While some examples is used above, the multiple candidate estimations may comprise any suitable estimation of the effective wheelbase 30.

**Action 203**

The method comprises estimating the effective wheelbase 30 based on the multiple candidate estimations.
Estimating the effective wheelbase based on the multiple candidate estimations may be based on the obtained information indicative of the at least one of wheel or tire parameters, e.g., as obtained in Action 201.
The effective wheelbase may be estimated as a weighted average of the multiple candidate estimations. Weights of the multiple candidate estimations may be predefined or alternatively, estimating the effective wheelbase 30 may further comprise determining the weights. Determining the weights of the multiple candidate estimations may be based on the operational condition of the vehicle unit 100 such as the at least one of wheel or tire parameters of the one or more wheels 41, 42 of the second axle group 2.
Estimating the effective wheelbase 30 may comprise estimating the effective wheelbase 30 by utilizing a trained machine learning model. Input to the machine learning model may comprise one or more parameters associated with a current operational condition of the vehicle unit 100, e.g., any of the information obtained in action 201.
The machine learning model may comprise any statistical model such as a neural network.
The machine learning model may be trained in advance and/or may be trained using feedback from controlling the vehicle unit 100.
The machine learning model may be trained on one or more training vehicle units using respective training wheelbase for respective different operational conditions of the respective training vehicle unit.
The machine learning model may for example be trained to determine the weights of the multiple candidate estimations. In these examples, estimating the effective wheelbase 30 may be based on the weighted average of the multiple estimation accounted for the weights determined by the machine learning model.
The machine learning model may further be trained and/or use as input any suitable CAN signals, sensor data, or any of the information as obtained in action 201.

**Action 204**

The method may comprise controlling the vehicle unit 100 based on the estimated effective wheelbase 30.
Controlling the vehicle unit 100 based on the estimated effective wheelbase 30 may comprise adjusting models and/or parameters used for controlling the vehicle unit 100 such that they account for the estimated effective wheelbase 30.

Controlling the vehicle unit 100 may comprise controlling any of the following, such as by reconfiguring associated parameters, based on the estimated wheelbase:

- suspension of the vehicle unit 100,
- load distribution of the vehicle unit 100,
- braking of the vehicle unit 100,
- tire load of wheels of the vehicle unit 100,
- yaw control of the vehicle unit 100,
- stability control of the vehicle unit 100,
- slip limits of wheels of the vehicle unit 100,
- slip angle control of wheels of the vehicle unit 100, or
- a combination thereof.

In other words, the vehicle unit 100 may be controlled in any suitable manner adapted for the estimated effective wheelbase 30.

**Action 205**

In some examples, the method may further comprise evaluating vehicle unit dynamics when the vehicle unit 100 is controlled using the estimated effective wheelbase 30.

The evaluation may indicate a success if the vehicle unit 100 behaves as intended with a predefined kinematic model accounting for the estimated effective wheelbase 30 and one or more operation performed by the vehicle unit 100. Otherwise the evaluation may indicate an unsuccessful evaluation.

For example, the evaluation may consider that the vehicle unit 100 shall behave in a certain manner, e.g., with respect to any suitable parameters relating to vehicle dynamics and with respect to the estimated effective wheelbase 30. If measured parameters of the vehicle unit 100 differs from calculated expected parameters by less than a set threshold of the measured parameters, the evaluation may indicate a successful evaluation and otherwise an unsuccessful evaluation. The expected parameters may comprise any one or more out of yaw, yaw rate, roll rate, pitch, pitch rate, lateral or longitudinal acceleration of the vehicle unit 100.

In this way, it may be detected whether or not the estimated effective wheelbase 30 is suitable for use in controlling the vehicle unit 100 or if adjustments to the estimation is needed.

The vehicle unit dynamics may be evaluated in any suitable manner, such as using sensor data of one or more sensors of the vehicle unit 100, using one or more signals of a CAN of the vehicle unit 100, or a combination thereof.

**Action 206**

In some examples, the method may further comprise training a machine learning model for estimating the effective wheelbase based on said evaluation, e.g., the machine learning model discussed in Action 203. The training of the machine learning model may typically be performed by feeding the evaluation of the vehicle unit dynamics into the machine learning model. In other words, the machine learning model may be a reinforcement learning model.

The machine learning model may adapt the estimation of the effective wheelbase 30 based on whether the evaluation of Action 205 is successful or unsuccessful by feeding back a corresponding reward to the machine learning model, thereby adapting the estimation of the effective wheelbase 30 based on whether or not the vehicle unit dynamics are evaluated as a success or not.

As an example, the training may cause the estimation of the effective wheelbase to adjust weights to the multiple candidate estimations such that the weighted average of the multiple candidate estimations is calculated in a different manner.

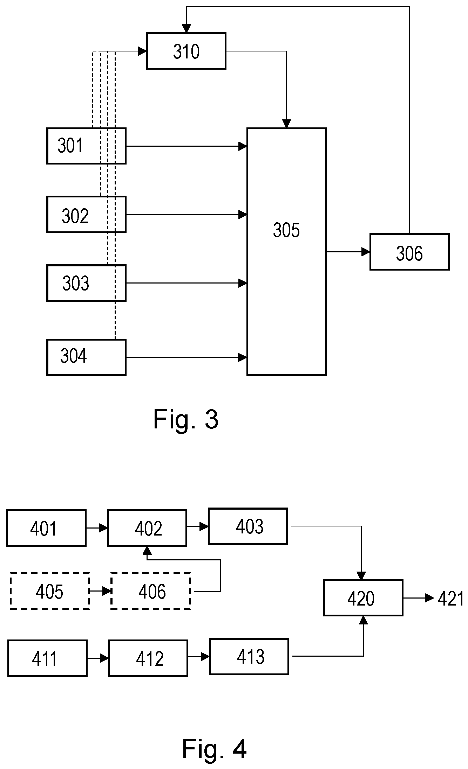

**FIG. 3** is a block diagram illustrating an example of obtaining wheel and/or tire parameters, e.g., including adhesion capabilities, when the vehicle unit 100 is not equipped with tire sensors.

In this example, tire and/or wheel parameters, e.g., as obtained in action 201, may comprise adhesion capabilities, e.g., comprising respective load, tire wear, tire radius of the respective wheel or tire, and may be obtained by any suitable model such as in the following manner using a Model predictive control (MPC) controller. A number of sources 301, 302, 303, 304 may be estimated to comprise information indicative of wheel end adhesion of the one or more wheels 41, 42 of the second axle group 2, e.g., based on

- friction estimated using dynamic steering, e.g., based on any one or more of: steering angle of the vehicle unit 100, steering torque of the vehicle unit 100, speed of the vehicle unit 100, vertical load applied to axles or wheels of the vehicle unit 100, and brake torque of the vehicle unit 100.
- friction estimated using propulsion or brakes, e.g., based on any one or more of: speed of the vehicle unit 100, torque applied to the one or more wheels 41, 42, vertical load applied to axles or wheels of the vehicle unit 100, and brake torque of the vehicle unit 100.

- friction estimated using other vehicle data, e.g., based on any one or more of: environmental data, wiper status of the vehicle unit 100, ambient temperature of the vehicle unit 100, and parking brake operation data such as release timing of the parking brake of the vehicle unit 100.

Each of the **sources 301, 302, 303, 304** may be estimated with a confidence and an adhesion value per wheel end of the second axle group 2.

The respective wheel end adhesion values may be estimated to comprise forces in any direction, friction in any direction, friction circle, available regenerative braking capability, rolling friction, etc.

Each of the sources may be **combined 305** where the confidence may be used to create a weighted average for the wheel end adhesion values, and may further be used for **controlling 306** the vehicle unit 100.

The adhesion values and/or confidence for each of the sources 301, 302, 303, 304 may be updated based on a feedback of vehicle response such as according to any suitable feedback model such as by comparing expected yaw rate and a true measured yaw rate of the vehicle unit 100. For example it may be estimated that the vehicle unit 100 should have an expected yaw rate interval certain actions based on a calculation using the effective wheelbase 30. Weights for the weighted average and/or the confidence values may be adjusted based on the correctness of the calculation.

The adhesion values may further be obtained as part of the information in action 201 and may be used to estimate the effective wheelbase 30 e.g., as part of any of the one or more multiple candidate estimations or as part of action 203.

**FIG. 4** is a block diagram illustrating an example for estimating the effective wheelbase 30.

**A first example estimation 403** of the effective wheelbase 30, e.g., the first candidate wheelbase estimation of action 202, may be estimated using a **force based effective wheelbase estimator 402,** e.g., as part of the computer system 900, which may estimate the effective wheelbase 30 based on a **set of inputs 401,** e.g., comprising a friction circle and longitudinal and lateral forces applied to the one or more wheels 41, 42 of the second axle group 2. The force based effective wheelbase estimator 402 may further estimate the effective wheelbase 30 based on a second input of force 406, which force 406 is estimated based on a slip stiffness and slip angle of the one or more wheels 41, 42 of the second axle group 2.

A **second example estimation 413** of the effective wheelbase 30, e.g., the second candidate wheelbase estimation of action 202, may be estimated using an **alternative effective wheelbase estimator 412,** e.g., as part of the computer system 900, which may estimate the effective wheelbase 30 based on a **set of inputs 402,** e.g., comprising a friction of the road surface, tire wear of the one or more wheels 41, 42 of the second axle group 2, and a vertical load applied to the one or more axles 21, 22 or one or more wheels 41, 42 of the second axle group 2.

The first and second example estimations 403, 413 may form a weighted average, e.g., as part of action 203, for estimating the effective wheelbase 30.

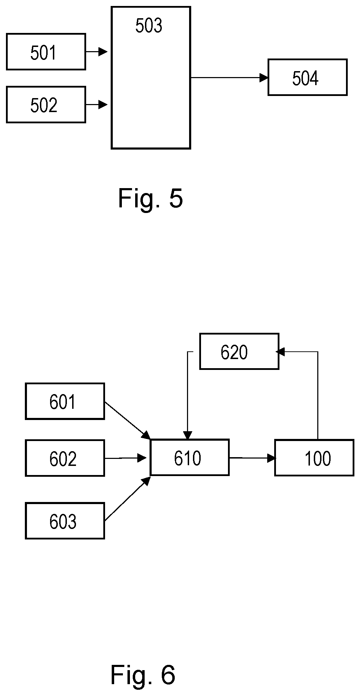

**FIG. 5** is a block diagram illustrating an example of using tire sensors also referred to as intelligent tires for obtaining wheel and/or tire parameters of the one or more wheels 41, 42 of the second axle group 2, e.g., as part of the information obtained in action 201.

Tire sensors may be attached to the respective wheels 41, 42 of the second axle group for obtaining **accelerometer data 501,** and optionally combined with vehicle **CAN signals 502,** to estimate a number of tire and/or wheel parameters using an **intelligent tire estimator 503** e.g., as part of the computer system 900.

The number of tire and/or wheel parameters may be estimated e.g., as part of the information obtained in action 201, such as any one or more of: friction of a respective wheel, forces applied to or acting upon the respective wheel, longitudinal slip of the respective wheel, lateral slip of the respective wheel, and tire radius of the respective wheel.

The number of tire and/or wheel parameters may alternatively or additionally be estimated to comprise friction data of the respective wheels 41, 42, lateral force data of the respective wheels 41, 42, slip angle data of the respective wheels 41, 42, or cornering data of the respective wheels 41, 42 such as cornering stiffness of the respective tires.

The number of tire and/or wheel parameters may also be obtained as one or more CAN signals 502.

Information estimated using the tire sensors may be used to determine the weights in the weighted average of the candidate estimations in action 203. The determination of the weights may then be optimized in real time using state estimators and observers from sensors of the vehicle, e.g., any suitable sensors such as an Inertial Measurement Unit (IMU)

**FIG. 6** is a block diagram illustrating an example for utilizing a machine learning model 610 to estimate the effective wheelbase 30. The machine learning model 610 may preferably be an Artificial Neural Network, but any other statistical model may also apply to examples herein. The machine learning model 610 may or may not be a reinforcement learning model. The machine learning model 610 may be trained on any suitable inputs of operational conditions of the vehicle unit 100 and/or other vehicle units and preferably with a truth labelling on an actual effective wheelbase 30. The actual effective wheelbase 30 may be set manually for every training data or may be measured in any suitable manner such as by having sensors for measuring the effective wheelbase 30 and/or by using force transducers to attain actual forces applied to the vehicle which, using predefined models can calculate the effective wheelbase precisely.

The operational conditions may be the information as obtained in action 201 or similar data such as any suitable sensor.

The machine learning model 610 may use as input and/or training data,

- an **example force based estimation 601** of the effective wheelbase 30, e.g., the first example estimation 403 or the first candidate wheelbase estimation of action 202,
- an **example alternative estimation 602** of the effective wheelbase 30, e.g., the second example estimation 413 or the second candidate wheelbase estimation of action 202, and optionally
- **one or more tire or wheel parameters 603,** e.g., as obtained in action 201, as acquired by estimation using sensor data of tire sensors of the one or more wheels 41, 42 of the second axle group 2.

When the machine learning mode is a reinforcement learning model, learning may be based on the real time feedback 620 from truck dynamics, e.g., as part of actions 205-206. In this way, if the vehicle unit is subject to change of any of suspension, tires, or brakes machine learning model 610 may learn and adapt its estimation of the effective wheelbase 30.

The trained machine learning model 610 may be deployed in one of the controllers on board a vehicle comprising the vehicle unit 100, or on a server based controller which receives the necessary feature data over the air, and may estimate effective wheelbase and report back to the vehicle unit 100, e.g., over the air for corrections.

Regression

The primary focus of the machine learning model 610 may be to perform regression on vision level .

Training

Test data may be collected by running a number of vehicles at different known effective wheelbases and using different suspension, axle configuration, wheelbases, vehicle speed and other operating conditions.

Learning methods

Any of the following methods may be used for the machine learning model 610, e.g., any of: Linear Regression, Ridge Regression, Neural Network Regression, Lasso Regression, Decision Tree Regression, Random Forest, KNN Model, Support Vector Machines (SVM), Gaussian Regression, and Polynomial Regression.

Deployment

The trained machine learning model 610 may be deployed in one of the controllers on board the vehicle comprising the vehicle unit 100 or on a server based controller which receives the necessary feature data over the air and may then estimate the effective wheelbase 30.

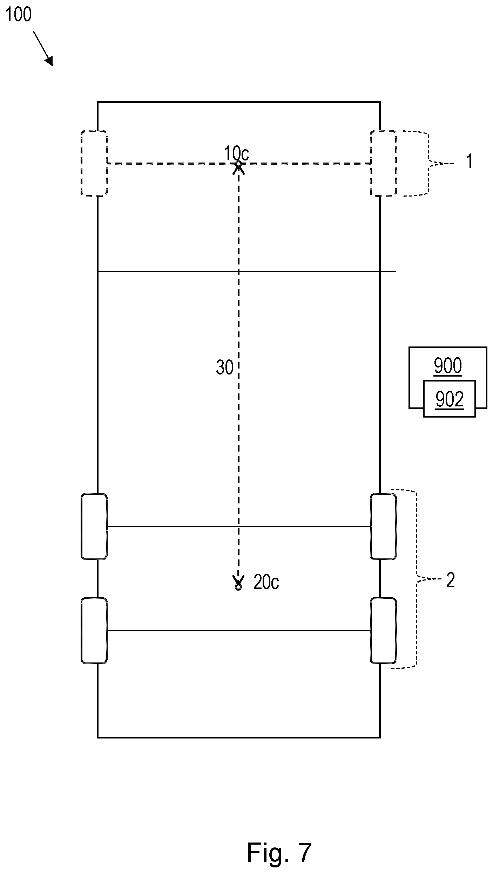

**FIG. 7** is another view of **FIG. 1,** according to an example. The computer system 900 comprising the processing circuitry 902 configured to estimate the effective wheelbase 30 of the vehicle unit 100 is provided.

The effective wheelbase 30 of the vehicle unit 100 is the distance between the first position 10c of the first coupling point or the first axle group 1 of the vehicle unit 100, to the second position 20c of the second axle group 2 of the vehicle unit 100.

The processing circuitry 902 is configured to obtain multiple candidate estimations of the effective wheelbase 30. The multiple candidate estimations have been estimated using different estimation models.

The processing circuitry 902 is configured to estimate the effective wheelbase based on the multiple candidate estimations.

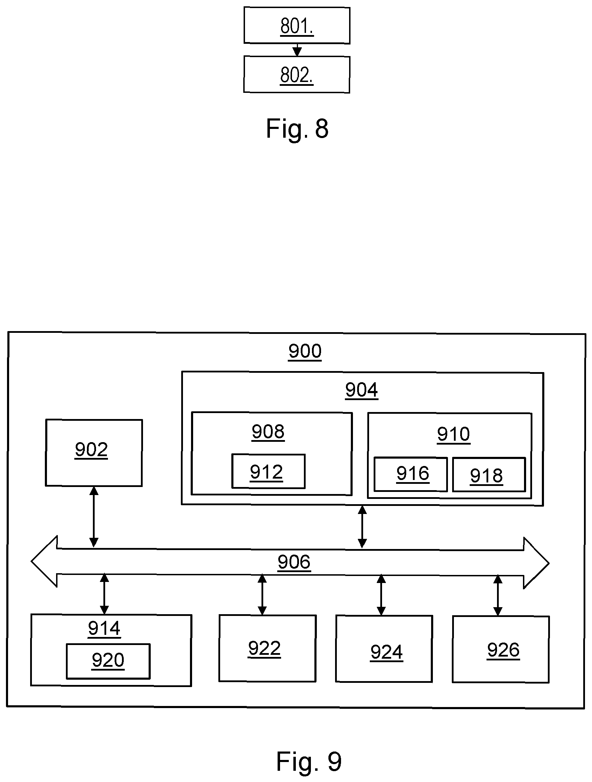

**FIG. 8** is a flow chart of an exemplary computer-implemented method for estimating the effective wheelbase 30 of the vehicle unit 100.

The effective wheelbase 30 of the vehicle unit 100 being the distance between the first position 10c of the first coupling point or the first axle group 1 of the vehicle unit 100, to the second position 20c of the second axle group 2 of the vehicle unit 100.

The method may be combinable with any of the examples herein, in particular the method comprising any one or more of actions 201-206.

**Action 801**

The method comprises, by the processing circuitry 902 of the computer system 900, obtaining multiple candidate estimations of the effective wheelbase. The multiple candidate estimations have been estimated using different estimation models.

**Action 802**

The method comprises, by the processing circuitry 902, estimating the effective wheelbase 30 based on the multiple candidate estimations.

Application due to estimations according to examples herein

With regards to any of the examples above, using accurate estimates of the effective wheelbase 30, e.g., as estimated in the above-mentioned examples, it may be possible to re-design various vehicle components such that they do not have to tolerate highly inaccurate effective wheelbase estimates. This may lead to more cost-effective solutions for designing and controlling vehicles. A non-limiting discussion of the different aspects is provided below which may be part of action 204 above.

Suspension: A precise understanding of the effective wheelbase 30 may aid in optimizing a suspension arrangement of the vehicle unit 100 for improved handling characteristics. For example, springs and dampers may be better designed or controlled, to better handle lateral loads and enhance overall stability such as when turning the vehicle unit 100.

Load Distribution: By considering the estimated effective wheelbase 30, the vehicle load may be more effectively distributed among the axles of the vehicle unit 100, thereby reducing the likelihood of uneven tire wear and improving overall suspension performance.

Brake Bias Optimization: Accurate knowledge of the effective wheelbase 30 may assist in optimizing brake bias, ensuring that the front and rear brakes of the vehicle unit 100 contribute appropriately to overall braking performance. This may lead to increased efficiency, effectiveness, and balanced braking, reducing the risk of skidding or loss of control during deceleration.

Electronic Brake Distribution (EBD): Advanced controllers, informed by the effective wheelbase 30 may enhance the effectiveness of EBD systems of the vehicle unit 100 such as by optimizing a brake force distribution based on the vehicle's dynamics with respect to the effective wheelbase 30.

Tire Load Distribution: The effective wheelbase 30 may be used for selecting and designing tires that can handle the load distribution characteristics of the vehicle. This may lead to improved tire life, better traction, and enhanced overall performance.

Tire Slip Angle Control: Advanced controllers, in conjunction with accurate effective wheelbase 30, may contribute to better control of tire slip angles during cornering, improving both handling and tire longevity.

Structural Rigidity: The effective wheelbase 30 may influences a chassis design of the vehicle unit 100 and structural rigidity. An optimized chassis design, considering the dynamic loads associated with the effective wheelbase 30, may lead to a lighter yet more rigid structure, contributing to improved handling and fuel efficiency.

Weight Distribution: Proper weight distribution, informed by the effective wheelbase 30, may achieve an improved or optimal balance between stability, performance, and fuel efficiency of the vehicle unit 100.

Regenerative Braking Optimization: With advanced controllers, regenerative braking systems of the vehicle unit 100 may be optimized based on the effective wheelbase and vehicle dynamics, enhancing energy recovery during deceleration.

In summary, accurate estimation of the effective wheelbase 30, coupled with advanced control systems, may provide valuable information for designing and optimizing various vehicle components in terms of directly improved vehicle control, or in terms of indirect improved vehicle control due to improve vehicle design. Examples herein, in turn, may contribute to more cost-effective solutions by improving performance, safety, and efficiency across entire vehicle systems.

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which Examples may respectively be combined with the above examples or subject matter of the attached claims in any suitable manner.

Example 1. A computer system 900 comprising processing circuitry 902 configured to estimate an effective wheelbase 30 of a vehicle unit 100, the effective wheelbase 30 of the vehicle unit 100 being a distance between a first position 10c of a first coupling point or first axle group 1 of the vehicle unit 100, to a second position 20c of a second axle group 2 of the vehicle unit 100, wherein the processing circuitry 902 is configured to:

- obtain multiple candidate estimations of the effective wheelbase 30, wherein the multiple candidate estimations have been estimated using different estimation models, and
- estimate the effective wheelbase based on the multiple candidate estimations.

Example 2. The computer system of Example 1, wherein obtaining the multiple candidate estimations comprises estimating or obtaining a first candidate wheelbase estimation estimated based on one or more forces F1, F2 applied to and/or acting on one or more wheels 41, 42 of the second axle group 2 according to a first estimation model.

Example 3. The computer system 900 of Example 2, wherein the first candidate wheelbase estimation is further estimated based on a respective wheel slip of the one or more wheels 41, 42, based on friction between a road surface of the one or more wheels 41, 42, or a combination thereof.

Example 4. The computer system 900 of any of Examples 1-3, wherein obtaining the multiple candidate estimations comprises estimating or obtaining a second candidate wheelbase estimation estimated based on vertical load applied to one or more wheels 41, 42 and/or one or more axles 21, 22 of the second axle group 2.

Example 5. The computer system 900 of Example 4, wherein the second candidate wheelbase estimation is further estimated based on at least one of:

- friction between a road surface travelled by the vehicle unit 100 and the one or more wheels 41, 42, and
- respective tire wear of respective tires of the one or more wheels 41, 42.

Example 6. The computer system 900 of any of Examples 1-5, wherein the processing circuitry 902 is configured to obtain information indicative of at least one of wheel or tire parameters of one or more wheels of the second axle group, and wherein estimating the effective wheelbase based on the multiple candidate estimations is based on the obtained information indicative of the at least one of wheel or tire parameters.

Example 7. The computer system 900 of Example 6, wherein the information indicative of the at least one of wheel or tire parameters is obtained from sensor data of one or more sensors of the vehicle unit 100, is obtained from one or more signals of a Controller Area Network (CAN) of the vehicle unit 100, or is obtained as a combination thereof.

Example 8. The computer system 900 of any of Examples 6 or 7, wherein the information indicative of the at least one of wheel or tire parameters of one or more wheels 41, 42 of the second axle group 2 is at least partly obtained by utilizing respective tire sensors attached to one or more wheels of the second axle group.

Example 9. The computer system 900 of any of Examples 1-8, wherein the effective wheelbase is estimated as a weighted average of the multiple candidate estimations, and wherein weights of the multiple candidate estimations are predefined or wherein the processing circuitry is configured to determine the weights of the multiple candidate estimations based on at least one of wheel or tire parameters of one or more wheels of the second axle group.

Example 10. The computer system 900 of any of Examples 1-9, wherein estimating the effective wheelbase 30 comprises estimating the effective wheelbase by utilizing a trained machine learning model, wherein input to the machine learning model comprises one or more parameters associated with a current operational condition of the vehicle unit 100.

Example 11. The computer system 900 of Example 10, wherein the machine learning model is trained on one or more training vehicle units using respective training wheelbase for respective different operational conditions of the respective training vehicle unit.

Example 12. The computer system 900 of Example 10 or 11, wherein the machine learning model is trained to determine weights of the multiple candidate estimations and wherein estimating the effective wheelbase is based on a weighted average of the multiple estimation accounted for the determined weights.

Example 13. The computer system 900 of any of Examples 10-12, wherein the processing circuitry is configured to, evaluate vehicle unit dynamics when the vehicle unit is controlled using the estimated effective wheelbase and to train the machine learning model based on said evaluation, the vehicle unit dynamics being evaluated using sensor data of one or more sensors of the vehicle unit 100, using one or more signals of a CAN of the vehicle unit 100, or a combination thereof.
Example 14. The computer system 900 of any of Examples 1-13, wherein the processing circuitry is configured to control the vehicle unit 100 based on the estimated effective wheelbase 30.
Example 15. The computer system 900 of any of Examples 1-14, wherein the second position 20c represents at least one of:

- a weighted average position with respect to a load distribution of load affecting or being applied to the second axle group 2,
- a position at which lateral forces are generated by the second axle group 2,
- a geometric center of the second axle group 2, and
- a center of rotation associated with the second axle group 2.

Example 16. A vehicle unit 100 comprising and/or is controlled by a computer system 900 of any of Examples 1-15.
Example 17. A computer-implemented method for estimating an effective wheelbase 30 of a vehicle unit 100, the effective wheelbase 30 of the vehicle unit 100 being a distance between a first position 10c of a first coupling point or first axle group 1 of the vehicle unit 100, to a second position 20c of second axle group 2 of the vehicle unit 100, wherein the method comprising:

- by processing circuitry 902 of a computer system 900, obtaining 202, 801 multiple candidate estimations of the effective wheelbase, wherein the multiple candidate estimations have been estimated using different estimation models, and
- by the processing circuitry 902, estimating 203, 802 the effective wheelbase 30 based on the multiple candidate estimations.

Example 18. The method of Example 17, further comprising any one or more of:

- by the processing circuitry 902, obtaining 201 information of at least one of operational conditions of the vehicle unit, preferably comprising information indicative of at least one of wheel or tire parameters of one or more wheels of the second axle group;
- by the processing circuitry 902, controlling 204 the vehicle unit based on the estimated effective wheelbase; and
- by the processing circuitry 902, evaluating 205 vehicle unit dynamics when the vehicle unit is controlled using the estimated effective wheelbase and training 206 a machine learning model for estimating the effective wheelbase based on said evaluation.

Example 19. A computer program product comprising program code for performing, when executed by the processing circuitry 902, the method of any of Examples 17-18.
Example 20. A non-transitory computer-readable storage medium comprising instructions, which when executed by the processing circuitry, cause the processing circuitry 902 to perform the method of any of Examples 17-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.
It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.
Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

**1.** A computer system (900) comprising processing circuitry (902) configured to estimate an effective wheelbase (30) of a vehicle unit (100), the effective wheelbase (30) of the vehicle unit (100) being a distance between a first position (10c) of a first coupling point or first axle group (1) of the vehicle unit (100), to a second position (20c) of a second axle group (2) of the vehicle unit (100), wherein the processing circuitry (902) is configured to:

- obtain multiple candidate estimations of the effective wheelbase (30), wherein the multiple candidate estimations have been estimated using different estimation models, and
- estimate the effective wheelbase (30) based on the multiple candidate estimations.

**2.** The computer system (900) of claim 1, wherein obtaining the multiple candidate estimations comprises estimating or obtaining a first candidate wheelbase (30) estimation estimated based on one or more forces (F1, F2) applied to and/or acting on one or more wheels (41, 42) of the second axle group (2) according to a first estimation model, preferably the first candidate wheelbase (30) estimation is further estimated based on a respective wheel slip of the one or more wheels (41, 42), based on friction between a road surface of the one or more wheels (41, 42), or a combination thereof.

**3.** The computer system (900) of any one of the preceding claims, wherein obtaining the multiple candidate estimations comprises estimating or obtaining a second candidate wheelbase (30) estimation estimated based on vertical load applied to one or more wheels (41, 42) and/or one or more axles (21, 22) of the second axle group (2), preferably the second candidate wheelbase (30) estimation is further estimated based on at least one of:

- friction between a road surface travelled by the vehicle unit (100) and the one or more wheels (41, 42), and
- respective tire wear of respective tires of the one or more wheels (41, 42).

**4.** The computer system (900) of any one of the preceding claims, wherein the processing circuitry (902) is configured to obtain information indicative of at least one of wheel or tire parameters of one or more wheels (41, 42) of the second axle group (2), and wherein estimating the effective wheelbase (30) based on the multiple candidate estimations is based on the obtained information indicative of the at least one of wheel or tire parameters, preferably the information indicative of the at least one of wheel or tire parameters is obtained from sensor data of one or more sensors of the vehicle unit (100), is obtained from one or more signals of a Controller Area Network (CAN) of the vehicle unit (100), or is obtained as a combination thereof.

**5.** The computer system (900) of claim 4, wherein the information indicative of the at least one of wheel or tire parameters of one or more wheels (41, 42) of the second axle group (2) is at least partly obtained by utilizing respective tire sensors attached to one or more wheels (41, 42) of the second axle group (2).

**6.** The computer system (900) of any one of the preceding claims, wherein the effective wheelbase (30) is estimated as a weighted average of the multiple candidate estimations, and wherein weights of the multiple candidate estimations are predefined or wherein the processing circuitry (902) is configured to determine the weights of the multiple candidate estimations based on at least one of wheel or tire parameters of one or more wheels (41, 42) of the second axle group (2).

7. The computer system (900) of any one of the preceding claims, wherein estimating the effective wheelbase (30) comprises estimating the effective wheelbase (30) by utilizing a trained machine learning model, wherein input to the machine learning model comprises one or more parameters associated with a current operational condition of the vehicle unit (100), preferably the machine learning model is trained on one or more training vehicle unit (100)s using respective training wheelbase (30) for respective different operational conditions of the respective training vehicle unit (100).

8. The computer system (900) of claim 7, wherein the machine learning model is trained to determine weights of the multiple candidate estimations and wherein estimating the effective wheelbase (30) is based on a weighted average of the multiple estimation accounted for the determined weights.

9. The computer system (900) of any one of claims 7 - 8, wherein the processing circuitry (902) is configured to, evaluate vehicle unit (100) dynamics when the vehicle unit (100) is controlled using the estimated effective wheelbase (30) and to train the machine learning model based on said evaluation, the vehicle unit (100) dynamics being evaluated using sensor data of one or more sensors of the vehicle unit (100), using one or more signals of a Controller Area Network (CAN) of the vehicle unit (100), or a combination thereof.

10. The computer system (900) of any one of the preceding claims, wherein the processing circuitry (902) is configured to control the vehicle unit (100) based on the estimated effective wheelbase (30), and/or wherein the second position (20c) represents at least one of:

- a weighted average position with respect to a load distribution of load affecting or being applied to the second axle group (2),
- a position at which lateral forces (F1, F2) are generated by the second axle group (2),
- a geometric center of the second axle group (2), and
- a center of rotation associated with the second axle group (2).

11. A vehicle unit (100) comprising and/or is controlled by the computer system (900) of any one of the preceding claims.

12. A computer-implemented method for estimating an effective wheelbase (30) of a vehicle unit (100), the effective wheelbase (30) of the vehicle unit (100) being a distance between a first position (10c) of a first coupling point or first axle group (1) of the vehicle unit (100), to a second position (20c) of a second axle group (2) of the vehicle unit (100), wherein the method comprising:

- by processing circuitry (902) of a computer system (900), obtaining (202, 801) multiple candidate estimations of the effective wheelbase (30), wherein the multiple candidate estimations have been estimated using different estimation models, and
- by the processing circuitry (902), estimating (203, 802) the effective wheelbase (30) based on the multiple candidate estimations.

13. The method of claim 12, further comprising any one or more of:

- by the processing circuitry (902), obtaining (201) information of at least one of operational conditions of the vehicle unit (100), preferably comprising information indicative of at least one of wheel or tire parameters of one or more wheels (41, 42) of the second axle group (2);
- by the processing circuitry (902), controlling (204) the vehicle unit (100) based on the estimated effective wheelbase (30); and
- by the processing circuitry (902), evaluating (205) vehicle unit (100) dynamics when the vehicle unit (100) is controlled using the estimated effective wheelbase (30) and training (206) a machine learning model for estimating the effective wheelbase (30) based on said evaluation.

14. A computer program product comprising program code for performing, when executed by the processing circuitry (902), the method of any one of claims 12 or 13.

15. A non-transitory computer-readable storage medium comprising instructions, which when executed by the processing circuitry (902), cause the processing circuitry (902) to perform the method of any one of claims 12 or 13.

100
200
D
10
10c
40
40
40
40
11
1
31
30
900
902
32
F1
41
21
31c
41
20c
2
F2
42
22
42
32c

Fig. 1

201.
202.
203.
204.
205.
206.

Fig. 2

310
301
302
303
304
305
306

Fig. 3

401
402
403
405
406
420
421
411
412
413

Fig. 4

501
502
503
504

Fig. 5

620
601
602
610
100
603

Fig. 6

100
10c
1
30
900
902
20c
2

Fig. 7

801.
802.

Fig. 8

900
904
908
912
910
916
918
902
906
914
920
922
924
926

Fig. 9

Europäisches Patentamt
European Patent Office
Office européen des brevets

# EUROPEAN SEARCH REPORT

Application Number

EP 25 20 0396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2024/255636 A1 (KOLASINSKI KYLE [US] ET AL) 1 August 2024 (2024-08-01)<br>* paragraphs [0005], [0035] - [0037], [0041]; figure 6 * | 1,6,<br>10-15<br>7-9 | INV.<br>B60W40/12<br>G06N20/00 |
| X<br><br>Y | US 2022/169261 A1 (KOLLBERG PETER [SE] ET AL) 2 June 2022 (2022-06-02)<br>* paragraphs [0055], [0056]; claims 1,2,12; figures 4,5 * | 1,2,4,5,<br>11-15<br>3 | |
| Y | EP 2 914 474 B1 (VOLVO TRUCK CORP [SE]) 30 May 2018 (2018-05-30)<br>* paragraphs [0005], [0007], [0015], [0018]; claim 5; figure 1 * | 3 | |
| | | | TECHNICAL FIELDS SEARCHED (IPC) |
| | | | B60W<br>G06N |

The present search report has been drawn up for all claims

| Place of search | Date of completion of the search | Examiner |
|---|---|---|
| Munich | 22 January 2026 | Rameau, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 0396

This annex lists the patent family members relating to the patent documents cited in the above-mentioned European search report. The members are as contained in the European Patent Office EDP file on
The European Patent Office is in no way liable for these particulars which are merely given for the purpose of information.

22-01-2026

| Patent document cited in search report | Publication date | Patent family member(s) | Publication date |
|---|---|---|---|
| US 2024255636 A1 | 01-08-2024 | CN 116420094 A | 11-07-2023 |
| | | EP 4189431 A1 | 07-06-2023 |
| | | US 2024255636 A1 | 01-08-2024 |
| | | WO 2022027063 A1 | 03-02-2022 |
| US 2022169261 A1 | 02-06-2022 | CN 113661100 A | 16-11-2021 |
| | | EP 3953223 A1 | 16-02-2022 |
| | | US 2022169261 A1 | 02-06-2022 |
| | | WO 2020207572 A1 | 15-10-2020 |
| EP 2914474 B1 | 30-05-2018 | BR 112015009693 A2 | 24-04-2018 |
| | | CN 104768839 A | 08-07-2015 |
| | | EP 2914474 A1 | 09-09-2015 |
| | | US 2015291179 A1 | 15-10-2015 |
| | | WO 2014070047 A1 | 08-05-2014 |

EPO FORM P0459

For more details about this annex : see Official Journal of the European Patent Office, No. 12/82